# EUROPÄISCHE PATENTSCHRIFT

(11) **EP 1 482 202 B1**
(45) Veröffentlichungstag und Bekanntmachung des Hinweises auf die Patenterteilung: **27.12.2006**
(21) Anmeldenummer: 03012402.8
(22) Anmeldetag: 30.05.2003
(51) Int. Cl.: F16D 65/14, G05B 19/40

(54) **Steuerung elektromotorischer Stellglieder**
Control circuit for positioning motor
Circuit de contrôle pour moteur de positionnement

(43) Veröffentlichungstag der Anmeldung: 01.12.2004
(73) Patentinhaber: Kratzmaier, Erich, 82547 Eurasburg (DE)
(72) Erfinder: Kratzmaier, Erich, 82547 Eurasburg (DE); Zehetbauer, Rupert, 82436 Eglfing (DE)
(74) Vertreter: Szynka, Dirk

(56) Entgegenhaltungen:
- US-A- 4 300 661
- US-A- 4 311 945
- US-A- 4 845 416

## Beschreibung

Die vorliegende Erfindung bezieht sich auf die Steuerung elektromotorischer Stellglieder.

Elektromotorische Stellglieder sind alle mechanisch bewegbaren Einrichtungen zur Einstellung von Größen oder Positionen in einer technischen Apparatur, deren Antrieb auf elektrischen Mechanismen beruht. Der Begriff ist hier nicht auf Stellglieder in Regelstrecken und Steuerstrecken im engeren Sinn beschränkt sondern beinhaltet beispielsweise auch Stellglieder, die ein Bauteil in eine bestimmte Position bewegen oder aus dieser Position herausbewegen, etwa einen Verschluss schließen oder öffnen.

Solche Stellglieder sind im Stand der Technik häufig mit Druckfluidantrieben versehen, vorzugsweise pneumatisch angetrieben. Sie werden durch Schalten von Ventilen und entsprechende Druckbeaufschlagung oder Druckwegnahme angesteuert.

Elektromotorisch angetriebene Stellglieder sind ebenfalls bekannt. Ihre Ansteuerung ist auf der signaltechnischen Seite etwas aufwendiger, weil der entsprechende elektrische Antrieb mit den für die Bewegung und ggf. das Halten des Stellglieds und des von ihm angetriebenen Bauteils in einer bestimmten Position erforderlichen Strömen versorgt werden muss.

Andererseits haben elektrisch angetriebene Stellglieder den Vorteil eines geringeren Wartungsaufwands und ersparen eine eigene Druckfluidversorgung, wenn diese nicht ohnehin aus anderen Gründen in der entsprechenden Vorrichtung vorgesehen ist.

Das Dokument US 4,845,416 A zeigt einen rückgekoppelten Regelkreis zur Regelung eines Stellgliedbewegungsablaufs in Zusammenhang mit dem Hauptventil eines großen Arbeitsgerätes, etwa zur Erdbewegung. Bei einer Abweichung zwischen Positionsistwert und Positionssollwert wird infolge eines Fehlersignals ein Motorstrom erzeugt. Ein hydraulisches Pilotsystem soll durch Elektromotore ersetzt werden.

Die Erfindung hat zur Aufgabe, eine Schaltung anzugeben, die die Steuerung eines installations- und wartungsmäßig einfachen Stellglieds mit einer signaltechnisch einfachen Steuerung ermöglicht. Femer soll die Erfindung auch einen Satz aus einer solchen Schaltung mit einem Stellglied und ein aus diesem Satz und einer Steuerung aufgebautes Stellgliedsteuersystem sowie schließlich ein damit ausgestattetes Lasergerät angeben.

Die Erfindung richtet sich auf eine Schaltung zum Anschließen eines elektromotorischen Stellglieds an eine Steuerung, welche Schaltung dazu ausgelegt ist, bei Eingang eines Steuersignalpulses aus der Steuerung einen Antriebsstrom an das Stellglied auszugeben und nach Abschluss der elektromotorischen Bewegung des Stellglieds einen Haltestrom an das Stellglied auszugeben, der kleiner als der Antriebsstrom ist, dadurch gekennzeichnet, dass die Schaltung zum Anschließen des Stellglieds an eine Druckfluldsystemsteuerung ausgelegt ist, eine Pulsformschaltung zum Erzeugen eines für die Bewegung des Stellglieds ausreichend langen Pulses aus einem kürzeren Steuersignalpuls aufweist und dazu ausgelegt ist, ansprechend auf den Eingang des Steuersignalpulses während des mit der Pulsformschaltung erzeugten langen Pulses den Antriebsstrom an das Stellglied auszugeben und nach Abschalten des Antriebsstroms auf den Haltestrom umzuschalten.

Bevorzugte Ausgestaltungen dieser Schaltung sind in den abhängigen Ansprüchen angegeben.

Die erfindungsgemäße Schaltung zeichnet sich dadurch aus, dass sie an einer eigentlich für Druckfluidstellglieder ausgelegten elektronischen, insbesondere SPS-Steuerung (speicherprogrammierbare Steuerung) angeschlossen werden kann. Solche Druckfluidsteuerungen geben elektrische Pulse zur Ventilsteuerung aus, wobei die davon versorgten Druckfluidstellglieder (im Folgenden wird der Einfachheit halber von pneumatischen Stellgliedern gesprochen) durch entsprechende Drücke bewegt und in der angefahrenen Position gehalten werden. Die erfindungsgemäße Schaltung ist nun dazu ausgelegt, nach Abschluss der elektromotorischen Bewegung des Stellglieds einen Haltestrom an das Stellglied auszugeben, der zwar kleiner als der für die elektromotorische Bewegung erforderliche Antriebsstrom ist, jedoch von Null verschieden ist und eine bestimmte dauerhafte Haltekraft erzeugt.

Damit hat die Erfindung den Vorteil, dass sich die Steuerung auf einfache Steuerpulse beschränken kann, die das entsprechende Stellglied "setzen". Die erfindungsgemäße Schaltung sorgt bei einem solchen Steuersignalpuls für die Erzeugung des erforderlichen Antriebsstroms und die nachfolgende Erzeugung des Haltestroms. Durch den Haltestrom kann das Stellglied in der entsprechenden Position gegen eventuelle äußere Kräfte durch Erschütterungen oder Gravitationskräfte gehalten werden, womit die Position insbesondere dauerhaft definiert bleibt. Im Prinzip wäre es natürlich auch möglich, das Stellglied in den angestrebten Positionen mechanisch zu verriegeln, also durch eine rein mechanische Lösung an einer Bewegung aus der Position heraus zu hindern, solange kein Antriebsstrom erzeugt wird. Jedoch bringt dies zusätzlichen Aufwand für mechanische Konstruktionen und mit diesen Konstruktionen auch einen zusätzlichen Bedarf an Wartung und weitere Störrisiken mit sich. Die erfindungsgemäße Schaltung soll daher in zumindest einer der anzufahrenden Positionen einen entsprechenden Haltestrom erzeugen, vorzugsweise in allen anzufahrenden Positionen.

Weitere Vorteile der Verwendung elektromotorischer Stellglieder an Stelle von druckfluidbetriebenen Stellgliedern liegen darin, dass sich in den verschiedenen Bewegungsrichtungen leicht gleich große Kräfte erzielen lassen. Dies ist bei hydraulischen oder pneumatischen Zylindern i. d. R. nicht der Fall.

Im Prinzip könnte die Position dabei messtechnisch überwacht werden und der Haltestrom durch einen Regelkreis so geregelt werden, dass die Position beibehalten bleibt. Einfacher und bei dieser Erfindung bevorzugt ist es jedoch, in der entsprechenden Position einen mechanischen Anschlag vorzusehen, gegen den das Stellglied bzw. das von ihm bewegte Bauteil mit der durch den Haltestrom erzeugten Kraft angedrückt wird.

Die erfindungsgemäße Vorrichtung beinhaltet ferner eine Pulsformschaltung zum Erzeugen eines ausreichend langen Pulses für die Bewegung des Stellglieds. Diese Pulsformschaltung dient also dazu, einen möglicherweise zu kurzen Steuersignalpuls der Steuerung in einen längeren Puls umzuwandeln, der der Dauer des Antriebsstroms entspricht. Dieser Puls ist dabei entweder selbst in Form des Antriebsstroms gegeben oder dient zur Steuerung entsprechender Schalter zum Ein- und Ausschalten des Antriebsstroms.

Weiterhin ist vorzugsweise eine Pulsformschaltung vorgesehen, die Steuersignalpulse auf ein vorgegebenes Pulspotential bringt, insbesondere im Betrag zu große Potentiale der Pulse auf ein vorgegebenes Potential beschränkt. Dies dient zur Erzeugung eines vorgegebenen Steuerpulses für Antriebsstromschalter bzw. für Definition der Größe des Antriebsstroms. Vorteilhafterweise sind beide Pulsformschaltungen miteinander kombiniert.

Femer kann eine bistabile Relaisschaltung vorgesehen sein, die in ihren beiden stabilen Zuständen jeweils einer Bewegungsrichtung des Stellglieds entspricht und abhängig von Steuersignalpulsen umgesetzt wird. Dabei kann das Vorzeichen der Steuersignalpulse oder auch die Identität des Eingangs, an dem sie empfangen werden, den entsprechenden Bewegungsrichtungen und Zuständen der bistabilen Relaisschaltung entsprechen. Die eingestellte Bewegungsrichtung bleibt dabei insbesondere bei Versorgungsunterbrechungen stabil erhalten und definiert.

Insbesondere bei sicherheitsrelevanten Anwendungen, auf die im Folgenden noch näher eingegangen wird, ist ferner eine Verriegelungsschaltung bevorzugt. Diese Verriegelungsschaltung dient dazu, einen Haltezustand des Stellglieds in einer bestimmten angefahrenen Position zu verriegeln, also vom weiteren Eingang eines eventuellen Steuerpulses unabhängig zu machen. Dies bedeutet, dass der entsprechende Haltezustand, also die angefahrene Position des Stellglieds, solange aufrecht erhalten bleibt, bis die Verriegelungsschaltung den Verriegelungszustand wieder löst. Während des Verriegelungszustands reagiert das Stellglied auf Steuersignalpulse, die sonst einen Antriebsstrom und damit eine Bewegung hervorrufen würden, nicht.

Weiterhin ist die erfindungsgemäße Schaltung vorzugsweise mit Regelschaltungen für den Antriebsstrom und den Haltestrom ausgestattet. Sie kann ferner eine Filterschaltung, etwa eine Tiefpassschaltung, zum Ausfiltern von Störpulsen an den Steuersignaleingängen aufweisen. Eine weitere vorteilhafte Ausgestaltung sieht eine Überstromüberwachung an der Motorversorgung vor, die im Falle von übergroßen Versorgungsströmen des Motors abschaltet.

Häufig werden elektromotorische Stellglieder nicht einzeln sondern in einer Mehrzahl in einer technischen Apparatur eingesetzt. Dabei können sie natürlich parallel durch gemeinsame Schaltungen angesteuert werden, solange die Bewegungen synchron erfolgen können. Häufig sind jedoch auch eine Mehrzahl erfindungsgemäßer Schaltungen notwendig. Die Erfindung sieht hierzu eine weitere Ausgestaltung vor, bei der die Schaltungen dann jeweils in separaten Modulgehäusen vorgesehen sind. Die Modulgehäuse tragen elektrische Steckverbindungselemente und sind damit auf Modulsteckplätze in einer Verteilerplatte aufsteckbar. Die Verteilerplatte wiederum ist mit der Steuerung verbunden und empfängt und verteilt die entsprechenden Steuersignale. Ferner erfolgt die Versorgung der Schaltungen über die Verteilerplatte. Die Module haben jeweils Anschlussmöglichkeiten für Zuleitungen zu den Stellgliedern. Insgesamt lässt sich damit mit den erfindungsgemäßen Schaltungen in ihren Modulgehäusen eine einer pneumatischen Verteilerinsel sehr ähnliche zentrale Signal- und Leistungsversorgung sowie Halterung der Schaltungen erzielen. Diese Lösung ist vor allem auch beim Nachrüsten oder Austauschen von Stellgliedern und/oder Schaltungen in Folge ihres modularen Aufbaus sehr praktisch.

Die Erfindung bezieht sich neben dem beschriebenen Satz aus einer Mehrzahl Schaltungen auch auf einen Satz aus einem elektromotorischen Stellglied und einer beschriebenen Schaltung, wobei natürlich auch eine Mehrzahl Stellglieder mit einer oder auch einer Mehrzahl Schaltung/en vorgesehen sein können. Das für die Erfindung bevorzugte Stellglied ist vorzugsweise ein Schubstangenstellglied mit im Folgenden noch näher erläuterten und im Ausführungsbeispiel veranschaulichten Merkmalen. Vorsorglich wird darauf hingewiesen, dass sich die Anmelderin für die Merkmale des Stellglieds als solches die spätere Aufstellung von Patentansprüchen ohne die Merkmale der Steuerschaltung vorbehält. Die körperlichen Merkmale des Stellglieds sollen also als von dem Rest der Erfindung unabhängig offenbart verstanden werden.

Vorzugsweise weist das Stellglied eine Abtriebswelle eines elektrischen Rotationsmotors auf (bei dem elektromotorischen Antrieb könnte es sich natürlich auch um einen Linearmotor handeln). Diese Abtriebswelle trägt ein Ritzel, das in eine Zahnstange greift. Diese Zahnstange ist entweder einheitlich mit einer Schubstange ausgebildet oder mit dieser so verbunden, dass die Schubstange letztlich angetrieben wird, also in irgendeiner Form körperlich oder befestigungstechnisch mit einer Schubstange gekoppelt ist. Damit stellt das bevorzugte erfindungsgemäße Stellglied einen elektromotorischen Ersatz für einen Druckfluidzylinder, insbesondere einen Pneumatikzylinder dar. Insbesondere ist das erfindungsgemäße Stellglied durch den elektromotorischen Antrieb ohne weiteren Aufwand so auszulegen, dass in beiden Bewegungsrichtungen der Schubstange gleich große Kräfte erzielt werden. Im Übrigen kann die Schubstange ohne besondere Maßnahmen verdrehsicher ausgeführt sein, was bei Druckfluidzylindem zu größerem Aufwand führt.

Die Bewegungen der Schubstange bzw. Zahnstange sind vorzugsweise elektrisch durch jeweilige Endpositionsschalter und einen Zwischenpositionsschalter überwacht. Dabei ist der Zwischenpositionsschalter in der Position einstellbar. Die beiden Endpositionsschalter müssen nicht notwendigerweise gleichzeitig vorliegen sondern können auch als optionale Ausstattungen aufgefasst werden. Insbesondere kann je nach Seitenorientierung des einen Satzes des Stellglieds nur der eine oder andere Endpositionsschalter an den jeweiligen Montageplatz in dem Stellglied montiert werden und die Bewegungsstrecke zwischen der entsprechenden Endposition und der Zwischenposition des Zwischenpositionsschalters für das Stellglied genutzt werden. Dann kann ein und dieselbe Stellgliedkonstruktion in verschiedenen Orientierungen (also links oder rechts) eingesetzt werden und dementsprechend mit dem einen oder anderen Schalter versehen sein. Wenn die Schalterkosten keine wesentliche Rolle spielen, können natürlich auch beide Endpositionsschalter montiert sein, wobei je nach Anwendungsfall möglicherweise nur einer der beiden Endpositionsschalter angeschlossen wird.

Der Zwischenpositionsschalter ist bei einer vorteilhaften Ausgestaltung ein Reed-Schalter, also ein über einen Magneten zu schaltender Kontakt. Dabei kann eine gegenüber dem Stellgliedgehäuse verschiebbar geführte Stange mit dem Kontakt oder dem Magneten vorgesehen sein, um damit die Zwischenposition des Stellglieds einzustellen.

Die bereits zuvor erwähnten mechanischen Anschläge für die anzufahrenden Positionen sind vorzugsweise durch jeweilige mechanische Endanschläge für die Endpositionen in dem eigentlichen Stellgliedgehäuse vorgesehen, und zwar in der Form, dass sie von den Endpositionsschaltern unabhängig sind, diese also nicht von der Haltekraft belastet werden. Der Zwischenpositionsanschlag ist vorzugsweise außerhalb des Stellgliedgehäuses vorgesehen, etwa als Anschlag für das zu bewegende Bauteil. Insbesondere kann dann die gewünschte Bauteilposition durch diesen Zwischenpositionsanschlag mechanisch justiert werden und der erwähnte verstellbare Reed-Schalter so nachgestellt werden, dass er genau diese Zwischenposition elektrisch erfasst.

Das Stellglied weist vorzugsweise ein geerdetes und geschlossenes Metallgehäuse auf, um die Beeinflussung durch elektromagnetische Pulse zu vermeiden. Dies gilt insbesondere bei den im Folgenden noch näher ausgeführten bevorzugten Anwendungsfällen.

Die Erfindung bezieht sich ferner auf ein Stellgliedsteuersystem, das neben dem bereits erwähnten Satz aus zumindest einem Stellglied und zumindest einer erfindungsgemäßen Schaltung eine Steuerung zur Ansteuerung des Stellglieds über die Schaltung umfasst. Die Erfindung betrifft darüber hinaus als bevorzugten Anwendungsfall ein Lasergerät, in dem ein solches Stellgliedsteuersystem eingebaut ist und das zugehörige Stellglied oder die zugehörigen Stellglieder optische Elemente des Lasergeräts positioniert. Insbesondere bezieht sich die Erfindung dabei auf Lasergeräte zur Fehlsichtbehandlung des menschlichen Auges, die an sich bereits bekannt und im Stand der Technik vielfältig dokumentiert sind. Bei solchen Geräten müssen optische Elemente, etwa Blenden, Verschlüsse und Ähnliches, sicher positioniert werden. Da die Geräte häufig in Kliniken oder Praxen außerhalb einer Werkstatt-Infrastruktur eingesetzt werden, spielen Wartungsgesichtspunkte eine wesentliche Rolle, so dass es besonders attraktiv ist, dort Pneumatiksysteme durch elektrische Systeme zu ersetzen. Gerade hier waren aber bislang pneumatische Stellglieder im Einsatz, so dass die Erfindung von besonderem Interesse ist. Die Erfindung eignet sich hier auch zur Umrüstung bestehender Lasergeräte, wenn diese zur Reparatur oder Wartung ohnehin von einem Techniker angesehen werden müssen.

Die Erfindung wird im Folgenden anhand eines Ausführungsbeispiels näher erläutert, wobei die dabei offenbarten Einzelmerkmale auch in anderen Kombinationen erfindungswesentlich sein können.
- Fig. 1: zeigt eine Ansicht eines erfindungsgemäßen Stellglieds von rechts vorne.
- Fig. 2: zeigt eine Ansicht des erfindungsgemäßen Stellglieds von links vorne.
- Fig. 3: zeigt eine Ansicht des erfindungsgemäßen Stelglieds von hinten rechts oben.
- Fig. 4: zeigt eine perspektivische Ansicht eines modularen Satzes von erfindungsgemäßen Schaltungen zur Ansteuerung eines Stellglieds gemäß den Fig. 1 - 3 auf einer Verteilerplatte.
- Fig. 5: zeigt ein Schaltdiagramm einer erfindungsgemäßen Schaltung in einem der Module aus Fig. 4.

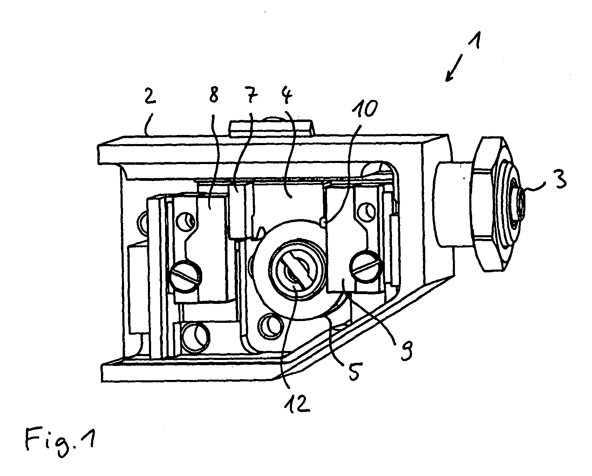

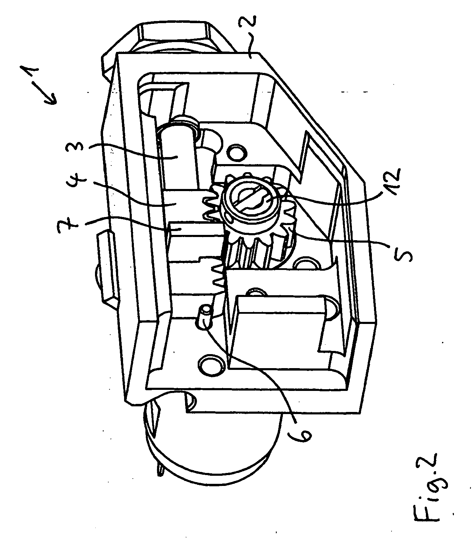

Fig. 1 zeigt das erfindungsgemäße Stellglied als Schubstangenglied von schräg rechts vorne. Mit 2 ist ein Aluminiumgehäuse bezeichnet, dessen vorderer und linker Deckelteil der Übersicht halber weggelassen ist. Im Einsatz ist das Gehäuse 2 vollständig geschlossen und als elektromagnetische Abschirmung geerdet. Rechts ragt aus dem Gehäuse 2 eine Schubstange 3 heraus, die von dem Stellglied 1 linear hin- und herbewegt werden kann. Die Schubstange 3 trägt ein als einfacher Zylinder dargestelltes Gewinde (mit eingezeichneter Mutter) zur Montage an einem zu bewegenden Bauteil. Der in dem Gehäuse 2 befindliche Teil der Schubstange ist als Zahnstange 4 ausgeführt und kämmt mit einem Antriebsritzel 5. Dieses Antriebsritzel 5 ist in Fig. 1 durch eine vordere kreisförmige Abdeckplatte 5 verdeckt. Es ist jedoch in Fig. 2, die das Stellglied 1 von links vorne zeigt, gut zu erkennen, weil dort die kreisförmige Abdeckplatte weggelassen ist. Die Abdeckplatte dient, wie auch eine auf der anderen Seite des Ritzels 5 vorgesehene Abdeckplatte, zur Führung der Zahnstange 4 auf dem Ritzel 5. Fig. 2 zeigt ferner, dass die Schubstange 3 im Bereich ihrer möglichen Überlappung mit dem Ritzel 5 als Zahnstange 4 ausgeführt und im Übrigen zylindrisch geformt ist.

Beide Fig. 1 und 2 zeigen die Schubstange 3 in ganz eingefahrener Position, wobei die Zahnstange 4 an einen in Fig. 2 erkennbaren Anschlagstift 6 anschlägt. Gleichzeitig drückt eine Schaltfahne 7 an der Zahnstange 4 einen Endpositionsschalter 8 ein, wie Fig. 1 zeigt. Dieser Endpositionsschalter 8 ist in Fig. 2 genauso wie ein gegenüberliegender Endpositionsschalter 9 weggelassen. Der Kontakt zwischen der Zahnstange 4 und dem Anschlagstift 6 verhindert eine Belastung des Endpositionsschalters 8 durch eine Haltekraft der Schubstange 3. Sinnentsprechend gilt das für eine nicht gezeichnete entgegengesetzte Position, in der die Schubstange 3 an den in Fig. 2 erkennbaren rechten Bereich des Gehäuses 2 anstößt. In dieser Position würde die Schaltfahne 7 den Endpositionsschalter 9 schalten, dessen Betätigungstaster in Fig. 1 mit 10 bezeichnet ist.

Man erkennt, dass die Endpositionsschalter mit nur einer einzigen Befestigungsschraube an entsprechend ausgeformten Montagestellen angesetzt werden können. In der praktischen Anwendung kann dann einer der beiden Endpositionsschalter 8 und 9 vorgesehen sein und der andere entweder körperlich weggelassen oder nicht kontaktiert sein.

Auf der Oberseite der Zahnstange 4 ist eine in Fig. 1 im rechten Bereich ansatzweise erkennbare Gleitplatte angeordnet, die es der Zahnstange 4 erlaubt, reibungsarm an der Oberseite des Gehäuses 2 zu gleiten. Ferner gleitet die Schubstange 3 durch die entsprechende Bohrung in dem Gehäuse 2. Die Schubstange 3 und die Zahnstange 4 sind also durch die Gleitplatte, die Bohrung, das Ritzel 5 und die beiden Abdeckplatten des Ritzels 5 gehalten und geführt.

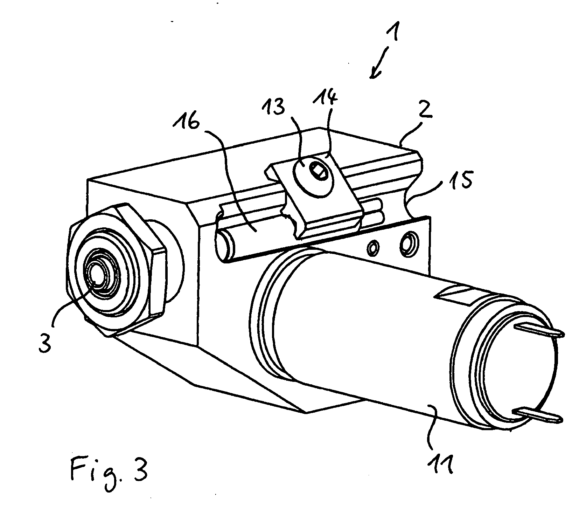

Fig. 3 zeigt dasselbe Stellglied 1 von der Rückseite zusammen mit einem in den Fig. 1 und 2 nicht eingezeichneten Antriebsmotor 11. Der Antriebsmotor 11 hat eine Abtriebswelle 12, die in den Fig. 1 und 2 im Inneren des Ritzels erkennbar ist und auf die das Ritzel 5 einfach aufgesteckt ist. Dabei greift eine Querstange des Ritzels 5 in entsprechende Nuten der Abtriebswelle 12, um einen Formschluss zur Drehmomentübertragung herzustellen.

Fig. 3 zeigt ferner eine über eine Schraube 13 festziehbare Klemmhalterung 14, mit der eine in einer Ausnehmung 15 an dem Gehäuse 2 geführte Stange 16 festgeklemmt werden kann. In Fig. 3 erkennt man, dass die Stange 16 an ihrem rechten Ende elektrische Kontakte trägt. Diese Kontakte sind mit zwei dünnen Drähten im Inneren der Stange 16 verbunden, die nach der Funktionsweise eines Reed-Schalters durch Einwirken eines Magnetfelds eines äußeren Dauermagneten geschlossen werden können. Dieser Dauermagnet ist in in den Zeichnungen nicht sichtbarer Weise an dem in Fig. 1 und 2 hinteren Bereich der Zahnstange 4 angebracht. Wenn also die Stange 16 mit dem Reed-Kontakt verschoben wird, so wird damit die Zwischenposition verschoben, in der der Magnet an der Zahnstange 4 den Reed-Kontakt in der Stange 16 schließt.

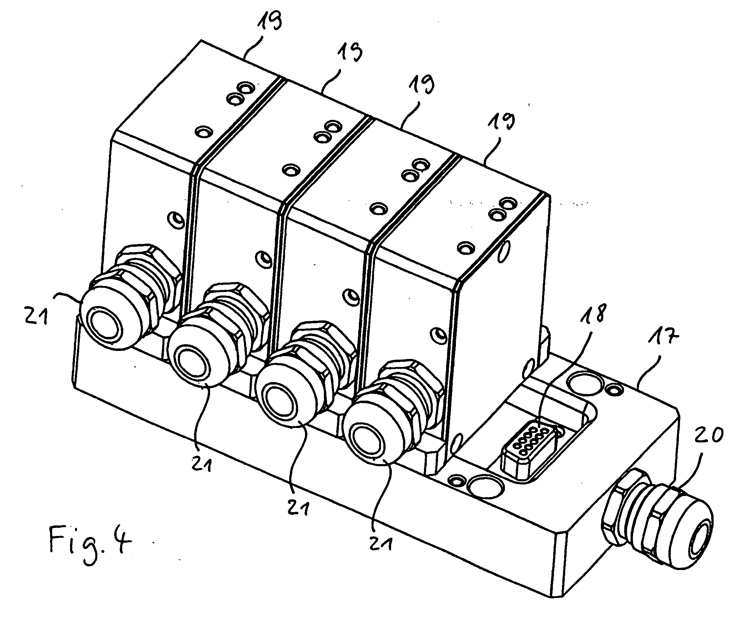

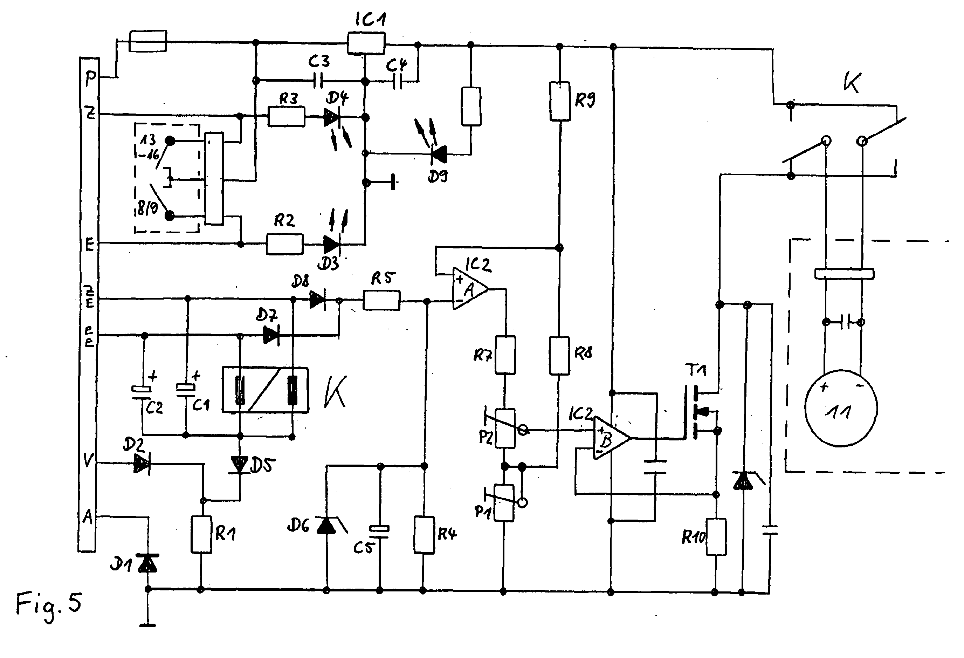

Der Elektromotor 11 in Fig. 3 kann also über die Abtriebswelle 12, das Ritzel 5, die Zahnstange 4, die Schubstange 3 und das daran angebrachte Gewinde letztlich ein Bauteil linear bewegen. Dazu muss er, in diesem Fall ein einfacher Gleichstrommotor, mit entsprechenden Strömen versorgt werden. Dazu dienen Schaltungsmodule, die in Fig. 4 eingezeichnet sind. Man erkennt in Fig. 4 vier nebeneinander auf einer Verteilerplatte 17 mit Steckverbindungsbuchsen 18 aufgesteckte Schaltungsmodule 19, die jeweils eine Ansteuerschaltung für den Elektromotor 11 enthalten, die anhand Fig. 5 noch näher beschrieben wird. Eine hier nur in Form einer Austrittsöffnung 20 eingezeichnete elektrische Kabelverbindung führt von der Verteilerplatte 17 zu einer SPS-Pneumatiksteuerung. Die verschiedenen Pole dieser Kabelverbindung sind im gemäß Fig. 4 unteren Bereich der Verteilerplatte an die Steckverbindungselemente 18 angeschlossen, so dass die einzelnen Module nach Einstecken mit der SPS-Steuerung verbunden sind. Aus den Modulen 19 führt jeweils eine ebenfalls nur mit der Austrittsöffnung 21 angedeutete Kabelverbindung zu dem Elektromotor 11 gemäß Fig. 3. Fig. 4 zeigt also ein steckbares Steuerschaltungsmodulsystem zur Ansteuerung von Stellgliedern 1 gemäß den Fig. 1 - 3.

Die in den Modulen 19 enthaltene Schaltung ist in Fig. 5 dargestellt und zeigt im rechten Bereich den Elektromotor 11 und im linken Bereich das Gegenstück 22 zu dem Steckverbindungselement 18 aus Fig. 4. An diesem Steckverbindungselement 22 liegen, von oben nach unten, ein Versorgungspotentialanschluss P mit +24 V Versorgungspotential gegenüber Masse (in Fig. 5 ganz unten), ein mit Z für Zwischenposition bezeichneter Signalausgang für den Kontakt des Reed-Schalters 16 aus Fig. 3, ein mit E bezeichneter Signalausgang für den Endpositionskontakt der Endpositionsschalter 8 oder 9 aus Fig. 1, ein mit ZE bezeichneter Steuerpulseingang für die Zwischenposition, ein mit EE bezeichneter Steuerpulseingang für die Endposition, ein mit V bezeichneter Verriegelungssignaleingang sowie schließlich, mit M bezeichnet, Masse an.

Das Versorgungspotential P versorgt über eine gewöhnliche flinke SMD-Sicherung einen in Fig. 5 oben horizontal eingezeichneten Versorgungspotentialzweig, in dem eine mit IC1 bezeichnete integrierte Spannungsregelschaltung eingezeichnet ist. Zwei äußere Kondensatoren C3 und C4 schließen hochfrequente Störungen kurz.

Der Z-Anschluss und der E-Anschluss sind über jeweilige Widerstände R3 bzw. R2 und Leuchtdioden D3 und D4 an das Versorgungspotential P angeschlossen, so dass die Endposition und die Zwischenposition optisch angezeigt werden können. Eine weitere Leuchtdiode D9 liegt zwischen Versorgungspotential P und Masse und zeigt das Vorliegen eines Versorgungspotentials an.

Der Z- und der E-Anschluss sind dabei die Signalausgänge zur Ausgabe eines entsprechenden Signals an die SPS-Steuerung. In Fig. 5 sind symbolisch auch die entsprechenden Schalter 8 bzw. 9 und 16 eingezeichnet, die über einen nur angedeuteten Steckkontakt an der Schaltung angeschlossen sind.

Die Steuerpulseingänge ZE und EE setzen jeweils eine bistabile Relaisschaltung K um und sind darüber hinaus über Dioden D8 bzw. D7 und einen Widerstand R5 an einem Operationsverstärker A eines ICs mit der Bezeichnung IC2 angeschlossen. Die Kondensatoren C1 und C2 beschalten die Relaisschaltung K und schließen wiederum hochfrequente Störungen kurz. Der Operationsverstärker IC2-A erzeugt ein Ausgangssignal durch Vergleich dieses Eingangs mit einem über eine Spannungsteilerschaltung R8, R9 erzeugten Vergleichspotential und gibt das Ausgangssignal an eine Spannungsteilerschaltung aus einem Widerstand R7 und zwei einstellbaren Widerständen P2 und P1 (Potentiometer). Der verschiebbare Abgriff des verstellbaren Widerstands P2 ist mit einem Eingang eines zweiten Operationsverstärkers B des IC2 verbunden und der verschiebbare Abgriff des zweiten verstellbaren Widerstands P1 mit der Spannungsteilerschaltung R8, R9.

Wenn der Operationsverstärker IC2-A - ohne Steuersignaleingang - einen massenahen Ausgang, also Ausgang "low" liefert, wird das Potential des Abgriffs zwischen P1 und P2 durch das Spannungsteilerverhältnis zwischen P1 (einstellbar) und R8 und R9 bestimmt. Da R7 sehr viel hochohmiger ist als P2 und P2 wiederum sehr viel hochohmiger als P1 (etwa 100 kΩ im Vergleich zu 10 kΩ im Vergleich zu 1 kΩ), entspricht der Abgriff an P2 im Wesentlichen diesem Potential, ist also im Wesentlichen durch die Einstellung von P1 bestimmt. Dies entspricht der Haltestromeinstellung.

Wenn andererseits der Ausgang des Operationsverstärkers IC2-A auf "high" schaltet, also etwa 19 V liefert, so werden zu diesem Potential zwischen P1 und P2 über die abgegriffene Strecke entlang P2 einige Volt hinzuaddiert, beispielsweise 1 V oder 1,5 V, was von der Einstellung von P2 abhängt. In diesem Fall wird also zu dem durch die Einstellung von P1 vorgegebenen Haltestrom ein durch die Einstellung von P2 definierter Zusatz hinzugefügt und somit der Antriebsstrom definiert. Da P1 sehr viel niederohmiger ist als die Reihenschaltung aus P2 und R7, wird das Potential zwizwischen P1 und P2 selbst von dem Ausgang des Operationsverstärkers IC2-A kaum beeinflusst.

Der Operationsverstärker IC2-B dient, mit dem in der beschriebenen Weise erzeugten Solleingang, als Regelschaltung für den Motorstrom. Der Motorstrom wird über einen Messwiderstand R10 gemessen und fließt über die steuerbare Strecke eines Transistors T1 in dem Motor 11. Dabei ist im rechten Bereich der Fig. 5 über dem Motor 11 der Schalterteil des bereits erwähnten bistabilen Relais K eingezeichnet, dessen Betätigungsspulen weiter links in Fig. 5 (angeschlossen an die Eingänge ZE und EE) eingezeichnet sind. Man erkennt, dass das bistabile Relais K die Polarität vertauscht, mit der der Motor 11 einerseits an das Versorgungspotential und andererseits über den Transistor T1 an Masse angeschlossen ist. Das Setzen des bistabilen Relais K gibt also die Drehrichtung des Motors vor, und zwar abhängig davon, ob der Steuerpuls über den Eingang ZE oder den Eingang EE ankommt. Im Übrigen führen sowohl Steuerpulse an ZE als auch solche an EE über den Operationsverstärker IC2-A zu einer Einstellung eines Antriebsstromsollwerts an dem Operationsverstärker IC2-B an Stelle der sonst vorliegenden Haltestromsollwerteinstellung.

Die Steuerpulse werden zwischen R5 und dem Eingang des Operationsverstärkers IC2-A einerseits durch eine Zenerdiode D6 spannungsbegrenzt, so dass (unbeabsichtigte) Überhöhungen der Steuerpulse unschädlich bleiben und insbesondere keine Veränderung der Stromsollwerte nach sich ziehen. Andererseits wird durch den Widerstand R5 in Folge eines Steuerpulses ein Kondensator C5 mit einer gewissen Zeitkonstante aufgeladen, um hochfrequente Störpulse in Folge der Tiefpasswirkung der Filterschaltung aus R5 und C5 auszufiltern. Wenn C5 über einen eigentlichen Steuerpuls aufgeladen wurde, entlädt sich C5 nach dem relativ kurzen Steuerpuls über einen Widerstand R4 gegen Masse, so dass der an dem Operationsverstärker IC2-A anliegende Puls gegenüber der zeitlichen Länge des ursprünglichen Steuerpulses verbreitert wird. Die Länge der so erzeugten Pulse ist ausreichend für eine vollständige Bewegung der Schubstange 3 und des dadurch angetriebenen Bauteils von einer Endposition in eine Zwischenposition oder umgekehrt. Die Bauteile R4, R5, C5 und D6 bilden also eine Pulsformschaltung zur Hochfrequenzausfilterung, Pulsverlängerung und Pulshöhenbegrenzung der Steuerpulse.

Schließlich kann ein Verriegelungssignal an dem Eingang V über eine Diode D2 das Potential am unteren Anschluss der Betätigungsspulen des bistabilen Relais K hochsetzen (oberer Anschluss eines Widerstands R1) und damit einen wesentlichen Strom durch die Betätigungsspulen verhindern. Ein während Anliegen des Verriegelungssignals ankommender Steuerpuls an ZE oder EE hat damit keine Umkehrung der Richtung des Motors 11 zur Folge sondern würde lediglich eine kurzzeitige Erhöhung des Haltestroms zu einem Antriebsstrom nach sich ziehen. Dies ist unschädlich, weil die Reduktion auf den Haltestrom ohnehin nur thermische Gründe hat (Schutz des Transistors T1) und damit kurzzeitige Erhöhungen keine Rolle spielen. Es ist jedoch sicher gestellt, dass sich die Schubstange 3 nicht in der Position verändert, weil sie lediglich mit erhöhter Kraft gegen einen entsprechenden Anschlag fährt, sich aber nicht in umgekehrter Richtung wieder von ihm entfernen kann.

Insgesamt bietet die Schaltung aus Fig. 5 also die Möglichkeit, einfache kurze Pneumatiksteuerpulse der SPS-Steuerung in geeigneter Weise zu verlängern und in der Höhe zu definieren und in einen Antriebsstrom für eine ausreichende Zeitspanne umzusetzen, wobei die Schaltung nach Abschalten des Antriebsstrom auf einen Haltestrom umschaltet und somit das elektromotorische Stellglied 1 mit einer Haltekraft in der angefahrenen Position hält. Dabei ist die Schaltung relativ einfach und kostengünstig aufgebaut und kann in der durch Fig. 4 dargestellten Weise sehr ähnlich einer Pneumatikverteilerinsel modular montiert werden. Insgesamt bietet die Erfindung damit die Möglichkeit, ein pneumatisches Stellgliedsystem in einem Gerät, insbesondere einem Lasergerät zur Fehlsichtbehandlung, durch ein elektrisches Stellgliedsystem zu ersetzen, ohne dabei die SPS-Steuerung und ihre Programmierung verändern zu müssen. Damit müssen bei der Herstellung des Lasergeräts nur relativ geringe Änderungen vorgenommen werden und sind insbesondere bereits im Einsatz befindliche Geräte nachrüstbar.

## Patentansprüche

1. Schaltung (19) zum Anschließen eines elektromotorischen Stellglieds (1) an eine Steuerung,
welche Schaltung (19) dazu ausgelegt ist, bei Eingang eines Steuersignalpulses (ZE, EE) aus der Steuerung einen Antriebsstrom an das Stellglied (1) auszugeben
und nach Abschluss der elektromotorischen Bewegung des Stellglieds (1) einen Haltestrom an das Stellglied (1) auszugeben, der kleiner als der Antriebsstrom ist,
**dadurch gekennzeichnet, dass** die Schaltung (19) zum Anschließen des Stellglieds (1) an eine Druckfluidsystemsteuerung ausgelegt ist,
eine Pulsformschaltung (R4, C5) zum Erzeugen eines für die Bewegung des Stellglieds (1) ausreichend langen Pulses aus einem kürzeren Steuersignalpuls (ZE, EE) aufweist
und dazu ausgelegt ist, ansprechend auf den Eingang des Steuersignalpulses während des mit der Pulsformschaltung (R4, C5) erzeugten langen Pulses den Antriebsstrom an das Stellglied (1) auszugeben und nach Abschalten des Antriebsstroms auf den Haltestrom umzuschalten.

2. Schaltung (19) nach Anspruch 1 mit einer Pulsformschaltung (D6, C5) zum Erzeugen eines vorgegebenen Pulspotentials aus einem Steuerpuls (ZE, EE) mit betragsgrößerem Potential.

3. Schaltung (19) nach einem der vorstehenden Ansprüche mit einer bistabilen Relaisschaltung (K) zum Festlegen einer Bewegungsrichtung des Stellglieds (1) abhängig von einem Steuerpuls.

4. Schaltung (19) nach einem der vorstehenden Ansprüche mit einer Verriegelungsschaltung (V, D2, D5, R1) zum Verriegeln eines Haltezustands des Stellglieds (1) unabhängig vom Eingang eines eventuellen Steuerpulses (ZE, EE).

5. Satz aus einer Mehrzahl Schaltungen (19) nach einem der vorstehenden Ansprüche, welche Schaltungen (19) in separaten Modulgehäusen montiert und auf Modulsteckplätzen (18) in einer Verteilerplatte (17) aufgesteckt sind, wobei die Verteilerplatte (17) zum Empfangen und Verteilen von Steuersignalen und zur Versorgung der Schaltungen (19) ausgelegt ist und an den Modulgehäusen jeweilige Stellgliedzuleitungen anschließbar sind (21).

6. Satz aus zumindest einem elektromotorischen Stellglied (1) und zumindest einer Schaltung (19) nach einem der Ansprüche 1 - 4 oder einem Satz aus Schaltungen (19) nach Anspruch 5.

7. Satz nach Anspruch 6, bei dem das zumindest eine Stellglied (1) ein Schubstangenstellglied ist.

8. Satz nach Anspruch 7, bei dem das Schubstangenstellglied (1) einen elektromotorischen Antrieb (11), ein daran an einer Abtriebswelle angebrachtes Ritzel (5) sowie eine von dem Ritzel (5) antreibbare und mit einer Schubstange (3) gekoppelte Zahnstange (4) aufweist.

9. Satz nach Anspruch 7 oder 8, bei dem ein Endpositionsschalter (8, 9) zur Erfassung einer Endposition der Schubstange (3) und ein in der Position einstellbarer Zwischenpositionsschalter (13 - 16) zum Erfassen einer Zwischenposition vorgesehen sind, wobei ein weiterer Endpositionsschalter (9, 8) zur Erfassung der anderen Endposition der Schubstangenbewegung anbringbar ist.

10. Satz nach Anspruch 9, bei dem der Zwischenpositionsschalter (13 - 16) ein Reed-Schalter mit einer verschiebbar geführten Stange (16) zur Einstellung der Zwischenposition ist.

11. Satz nach einem der Ansprüche 9 oder 10, bei dem das zumindest eine Stellglied (1) jeweils mechanische Endanschläge (6) für die Endposition aufweist, die die Endpositionen der Bewegung der Schubstange (3) unabhängig von den Endpositionsschaltern (8, 9) festlegen.

12. Stellgliedsteuersystem mit einer Steuerung und einem Satz nach einem der Ansprüche 6-11.

13. Lasergerät mit einem Stellgliedsteuersystem nach Anspruch 12, in welchem Lasergerät die Stellglieder (1) optische Elemente positionieren können.

14. Lasergerät nach Anspruch 13 zur Fehlsichtbehandlung des menschlichen Auges.

## Claims

1. A circuit (19) for connecting an electromotive actuator (1) to a control device,
said circuit (19) being adapted to output a drive current to said actuator (1) responsive to an input of a control signal pulse (ZE, EE) from said control device and to output a hold current to said actuator (1) being smaller than said drive current, after completion of an electromotive movement of said actuator (1),
**characterised in that** said circuit (19) is adapted for connecting said actuator (1) to a pressure fluid system control device,
comprises a pulse form circuit (R4, C5) for producing a sufficiently long pulse for said movement of said actuator (1) from a shorter control signal pulse (ZE, EE)
and is adapted to, responsive to said input of said control signal pulse and during said long pulse produced by said pulse form circuit (R4, C5), output said drive current to said actuator (1) and switch to said hold current after switching off said drive current.

2. A circuit (19) according to claim 1 comprising a pulse form circuit (D6, C5) for producing a predetermined pulse potential from a control pulse (ZE, EE) having an absolutely larger potential.

3. A circuit (19) according to one of the preceding claims comprising a bistable relay circuit (K) for defining a movement direction of said actuator (1) depending on a control pulse.

4. A circuit (19) according to one of the preceding claims comprising a latch circuit (V, D2, D5, R1) for latching a hold mode of said actuator (1) independent from an input of a possible control pulse (ZE, EE).

5. A set of a multiplicity of circuits (19) according to one of the preceding claims said circuits (19) being mounted in separate module casings and inserted on module connector portions (18) in a distribution board (17), said distribution board (17) being adapted for receiving and distributing control signals and for supplying said circuits (19), respective actuator supply lines being connectable (21) to said module casings.

6. A set of an electromotive actuator (1) and at least one circuit (19) according to one of claims 1 - 4 or a set of circuits (19) according to claim 5.

7. A set according to claim 6 wherein said at least one actuator (1) is a connecting rod actuator.

8. A set according to claim 7 wherein said connecting rod actuator (1) comprises an electromotive drive (11), a pinion (5) mounted thereon via a drive shaft, and a rack (4) drivable by said pinion (5) and coupled to a connecting rod (3).

9. A set according to claim 7 or 8 comprising an end position switch (8, 9) for detecting an end position of said connecting rod (3) and an intermediate position switch (13 - 16) adjustable in its position for detecting an intermediate position, a further end position switch (9, 8) being mountable for detecting the other end position of said movement of said connecting rod.

10. A set according to claim 9 wherein said intermediate position switch (13 - 16) is a Reed switch comprising a rod (16) guided in a shiftable manner for adjusting said intermediate position.

11. A set according to claim 9 or 10 wherein said at least one actuator (1) comprises respective mechanical end stops (6) for said end positions defining said end positions of said movement of said connecting rod (3) independent from said end position switches (8, 9).

12. An actuator control system comprising a control device and a set according to one of claims 6-11.

13. A laser apparatus comprising an actuator control system according to claim 12, in which laser apparatus said actuators (1) are adapted to position optical elements.

14. A laser apparatus according to claim 13 for defective vision treatment of the human eye.

## Revendications

1. Circuit (19) pour brancher un actionneur (1) à moteur électrique sur une commande,
lequel circuit (19) est conçu pour délivrer à l'actionneur (1) un courant propulsif, à l'entrée d'une impulsion de signal de commande (ZE ; EE) à partir de la commande
et après achèvement du déplacement par moteur électrique de l'actionneur (1), pour délivrer à l'actionneur (1) un courant d'arrêt qui est inférieur au courant propulsif,
**caractérisé en ce que** le circuit (19) pour le branchement de l'actionneur (1) est conçu sur une commande d'un dispositif à fluide sous pression,
**en ce qu'**il comporte un circuit en forme d'impulsion (RA, C5), pour générer à partir d'une impulsion de signal de commande plus courte (ZE, EE) une impulsion suffisamment longue pour le déplacement de l'actionneur (1)
et **en ce qu'**il est conçu pour délivrer le courant propulsif à l'actionneur (1), en réponse à l'entrée de l'impulsion de signal de commande, pendant l'impulsion longue générée avec le circuit, et pour commuter sur le courant d'arrêt après coupure du courant propulsif.

2. Circuit (19) selon la revendication 1, avec un circuit en forme d'impulsion (D6, C5) pour générer un potentiel d'impulsion prédéfini, à partir d'une impulsion de commande (ZE, EE) avec un potentiel de valeur plus élevée.

3. Circuit (19) selon l'une quelconque des revendications précédentes, avec un circuit à relais bistable (K) pour la détermination d'un sens de déplacement de l'actionneur (1), en fonction d'une impulsion de commande.

4. Circuit (19) selon l'une quelconque des revendications précédentes, avec un circuit de verrouillage (V, D2, D5, R1) pour verrouiller une position d'arrêt de l'actionneur (1), indépendamment de l'entrée d'une éventuelle impulsion de commande (ZE, EE).

5. Groupe composé d'une pluralité de circuits (19) selon l'une quelconque des revendications précédentes, lesquels circuits (19) sont montés dans des boîtiers de module séparés et sont enfichés sur des connecteurs (18) dans une plaque de distribution (17), la plaque de distribution (17) étant conçue pour réceptionner et distribuer des signaux de commande et pour alimenter les circuits (19) et des lignes d'alimentation de l'actionneur respectives pouvant être branchées (21) sur les boîtiers de module.

6. Groupe composé d'au moins un actionneur (1) à moteur électrique et d'au moins un circuit (19) selon l'une quelconque des revendications 1 à 4 ou d'un groupe de circuits (19) selon la revendication 5.

7. Groupe selon la revendication 6, dans lequel au moins un actionneur (1) est un actionneur à bielle.

8. Groupe selon la revendication 7, dans lequel l'actionneur à bielle (1) comporte un entraînement par moteur électrique (11), un pignon (5) monté sur ce dernier sur un arbre de sortie, ainsi qu'une crémaillère (4) pouvant être entraînée par le pignon (5) et accouplée avec une bielle (3).

9. Groupe selon la revendication 7 ou 8, dans lequel sont prévus un interrupteur de fin de course (8, 9) pour détecter la position finale de la bielle (3) et un interrupteur de position intermédiaire (13 à 16) réglable dans la position, pour détecter une position intermédiaire, un interrupteur de fin de course (9, 8) supplémentaire pouvant être monté, pour détecter l'autre position finale du déplacement de la bielle.

10. Groupe selon la revendication 9, dans lequel l'interrupteur de position intermédiaire (13 à 16) est un interrupteur Reed, avec une barre (16) guidée de façon déplaçable pour le réglage de la position intermédiaire.

11. Groupe selon l'une quelconque des revendications 9 et 10, dans lequel le au moins un actionneur (1) comporte chaque fois des butées mécanique de fin de course (6) pour la position finale, qui fixent les positions finales du déplacement de la bielle (3), indépendamment des interrupteurs de fin de course (8, 9).

12. Système de commande d'un actionneur, avec une commande et un groupe selon l'une quelconque des revendications 6 à 11.

13. Instrument à laser avec un système de commande d'un actionneur selon la revendication 12, dans lequel instrument à laser, les actionneurs (1) sont susceptibles de positionner des éléments optiques.

14. Instrument à laser selon la revendication 13 pour le traitement des troubles de la vue de l'oeil humain.
